# EUROPEAN PATENT APPLICATION

(11) **EP 4 607 092 A1**
(43) Date of publication of application: **27.08.2025**
(21) Application number: 25158992.5
(22) Date of filing: 20.02.2025
(51) Int. Cl.: F24C 7/08, F24C 15/10

(54) **HOME APPLIANCE**

(30) Priority: 23.02.2024 KR 20240026730
(71) Applicant: LG Electronics Inc., Yeongdeungpo-gu Seoul 07336 (KR)
(72) Inventor: PARK, Juyoung, 08592 Seoul (KR)
(74) Representative: Vossius & Partner Patentanwälte Rechtsanwälte mbB

(57) **Abstract**

Proposed is a home appliance. The home appliance of the present disclosure includes a casing (10) having a storage space therein, and a door (50) provided in front of the storage space to open and close the storage space. An electronic component unit (100) is disposed in the door (50). The electronic component unit (100) includes a camera device (120) for photographing the storage space and a lighting device (130) for emitting light into the storage space. A wire harness connects control devices (60, 90), which control the electronic component unit (100), with the electronic component unit (100). In this case, a plurality of noise filters is coupled to the wire harness. The noise filters remove EMI effectively, thereby improving the stability of the home appliance.

## Description

The present disclosure relates to a home appliance.

Home appliances, which accommodate objects in internal space and have a door, such as a cooking appliance, a refrigerator, and a clothing care device, are widely used. These home appliances may include a storage space for accommodating an object inside a cabinet constituting an exterior, and a door for opening and closing the storage space.

Recently, various electronic components are installed inside the door of a home appliance. For example, lights may be disposed in the door to illuminate objects in the interior space. Additionally, a camera may be disposed in the door to take pictures of objects. These electronic components may illuminate or photograph objects in an internal space through a viewing part formed in the door.

However, there is a problem that noise occurs in the signal of the camera due to currents and wired or wireless signals inside the home appliance. In particular, the internal structure of the home appliance is often composed of metal plates, so conducted noise caused by current-flowing conductors are more likely to occur. In addition, when a communication module is installed in the home appliance, radiated noise that is emitted (radiated) into the air may also be generated. This noise known as electromagnetic interference (EMI, hereinafter referred to as "EMI") reduces the safety of the home appliance and generate high-frequency noises.

In addition, when a camera device is provided in the home appliance, EMI may affect the camera and a control part that processes images captured by the camera. When noise occurs in the captured images, the quality of the home appliance will deteriorate.

In particular, when a lighting device installed adjacent to the camera is operated, EMI may be emitted from the lighting device, which may reduce the operational reliability and capturing quality of the camera. In this case, when an AC signal or switching signal is applied to the lighting device, a very large amount of EMI is generated, which may have a negative effect not only on the camera but also on all electronic components inside the home appliance.

Accordingly, the present disclosure has been made keeping in mind the above problems occurring in the related art, and an objective of the present disclosure is to effectively eliminate EMI generated from electronic components, such as an image sensing device and a lighting device, when such components are disposed in a door of a home appliance.

Another objective of the present disclosure is to eliminate EMI by disposing a noise filter at a position outside the narrow interior of the door.

Still another objective of the present disclosure is to apply an appropriate type of EMI filter depending on the type and location of electronic components disposed inside a home appliance.

In order to achieve the objectives of the present disclosure, according to the characteristics of the present disclosure, a home appliance of the present disclosure may include a casing having a storage space therein, and a door provided in front of the storage space to open and close the storage space. An electronic component unit may be disposed in the door. The electronic component unit may include a camera device for photographing the storage space and a lighting device for emitting light into the storage space. A wire harness may connect control devices, which control the electronic component unit, with the electronic component unit. In this case, a plurality of noise filters may be coupled to the wire harness. The noise filter may effectively remove EMI, thereby improving the stability of the home appliance.

Each of the noise filters may be positioned outside the door, and be disposed to face a surface of the casing.

The noise filter may be configured as a ferrite bead. The wire harness may pass through the ferrite bead or be wound around the ferrite bead and then pass through the ferrite bead.

The camera device and the control devices may be connected to each other by a camera wire. The camera wire may be provided with a camera noise filter.

The camera noise filter may be disposed to face a side surface of the casing.

The camera noise filter may include a first camera noise filter disposed on a first surface of the casing and a second camera noise filter. The second camera noise filter may be provided closer to a lower part of the door than the first camera noise filter and be disposed on a second surface of the casing.

The second camera noise filter may be composed of a plurality of second camera noise filters arranged in series along the camera wire. Each of the plurality of second camera noise filters may be configured as a ferrite bead.

The lighting device and the control devices may be connected to each other by a lighting wire. The lighting wire may be provided with the lighting noise filter.

The wire harness may include the camera wire which connects the camera device with the control devices, and the lighting wire which connects the lighting device with the control devices. In this case, the plurality of noise filters may be provided along the camera wire and the lighting wire.

The camera wire and the lighting wire may be disposed along a first side surface of the casing.

The camera wire may be disposed along the first side surface of the casing. The lighting wire may be disposed along a second side surface of the casing opposite to the first side surface.

The control devices may include a main control part connected to the lighting device, and an image control part connected with the main control part. The image control part may be connected to the camera device to control the camera device. The main control part and the image control part may be connected to each other by a control wire. The control wire may be provided with a control noise filter.

The wire harness may include the lighting wire which connects the lighting device with the control devices. The lighting wire may be provided with the plurality of lighting noise filters. The plurality of lighting noise filters may include a first lighting noise filter provided adjacent to the main control part among the control devices, and a second lighting noise filter provided adjacent to the image control part among the control devices.

A switching power converter may be connected to the main control part. The lighting noise filters may be provided between the switching power converter and the lighting device.

The casing may be provided with a display device. The display device may include a housing part, and a display part disposed in the housing part and exposed to the outside of the casing. In this case, some or all of the plurality of noise filters may be disposed in the housing part.

An upper space which is partitioned from the storage space may be formed above the storage space. At least some of the control devices, the wire harness, and the plurality of noise filters may be disposed in the upper space.

A power wire which receives external power may be connected to the control devices. The power wire may be provided with a plurality of power noise filters.

The wire harness may be disposed on the side surface of the casing. The plurality of noise filters may be disposed to face the surface of the casing.

The plurality of noise filters may be disposed on different surfaces of the casing.

The plurality of noise filters may be disposed along the wires extending in different directions.

The home appliance of the present disclosure as described above may have the following effects.

According to the present disclosure, the lighting device and the camera device may be disposed in the door of the home appliance, and the noise filter may prevent EMI generated by power applied to the lighting device. In particular, even if AC power or switched power is applied to the lighting device and a large amount of EMI is generated, the noise filter placed along the wire harness may effectively remove the EMI. Accordingly, the stability of the home appliance may be increased.

In addition, according to the present disclosure, the noise filter may be provided in the wire harness which connects the camera device disposed in the door with the control devices disposed in the casing, thereby preventing the noise of the camera device. Accordingly, the quality of images acquired from the camera device may be improved.

Furthermore, according to the present disclosure, the lighting device and the camera device may be disposed inside the door, but the noise filter may be provided at a location outside the interior of the door. Accordingly, the weight of the door may be prevented from increasing, and the internal structure of the door may be simplified.

Additionally, according to the present disclosure, the noise filter may prevent EMI generated from the lighting device disposed in the door, so AC power or switched power may be applied to the lighting device. Accordingly, a high voltage may be applied to the lighting device to further increase illuminance thereof, and thus the lighting device may be easily controlled.

In addition, according to the present disclosure, even if wires connected to the lighting device and the camera device, respectively, are installed side by side, the noise filter may prevent EMI from being transmitted between the wires. Accordingly, the storage of the wire harness and the manufacturing of the home appliance may be facilitated.

Additionally, the wire harness may be disposed along the side surface of the casing, and a portion of the noise filter may be provided in the wire harness so as to face the side surface of the casing. Accordingly, the noise filter may have a wider space to be installed and may effectively remove EMI conducted from the side surface of the casing.

In addition, according to the present disclosure, the plurality of noise filters may be disposed on different surfaces of the casing. The noise filters disposed on different surfaces may effectively remove not only EMI generated from the long path of the wire harness, but also EMI conducted from different metal plates. Therefore, the stability of the home appliance may be increased.

In addition, according to the present disclosure, at least some of the plurality of noise filters may be stored in the housing part constituting the display device. Accordingly, the mountability of the noise filters may be improved, and the noise filters may remain stored stably without separate fasteners.

Additionally, according to the present disclosure, the wire harness connected to the camera device may have a plurality of ferrite beads, which are the noise filters, arranged in series. The plurality of noise filters arranged in series may effectively prevent EMI without wires wound around the noise filters, so the noise filters may be applied even in narrow spaces in which winding the wires is difficult.

In addition, the home appliance of the present disclosure may include the plurality of noise filters, and the noise filters may be disposed along the path of the wire harness, thereby preventing damage to components due to an overvoltage. This may increase the stability and durability of the home appliance.

The above and other objectives, features, and other advantages of the present disclosure will be more clearly understood from the following detailed description when taken in conjunction with the accompanying drawings, in which:
FIG. 1 is a perspective view conceptually illustrating a wire harness and noise filters provided in a home appliance according to a first embodiment of the present disclosure;
FIG. 2 is a perspective view illustrating an open state of an upper space constituting the home appliance according to the first embodiment of the present disclosure;
FIG. 3 is a perspective view illustrating the structure of a door and the wire harness constituting the home appliance according to the first embodiment of the present disclosure;
FIG. 4 is a perspective view illustrating the wire harness and the noise filters arranged in the upper space constituting the home appliance according to the first embodiment of the present disclosure;
FIG. 5 is a block diagram conceptually illustrating electronic components, the wire harness connecting the components, and the noise filters constituting the home appliance according to the first embodiment of the present disclosure;
FIGS. 6 and 7 are views illustrating different types of noise filters constituting the home appliance according to the first embodiment of the present disclosure;
FIG. 8 is a block diagram conceptually illustrating electronic components, a wire harness connecting the components, and noise filters constituting the home appliance according to a second embodiment of the present disclosure;
FIG. 9 is a block diagram conceptually illustrating electronic components constituting the home appliance, a wire harness connecting the components, and noise filters according to a third embodiment of the present disclosure;
FIG. 10 is a perspective view conceptually illustrating a wire harness and noise filters provided according to a fourth embodiment of the present disclosure; and
FIG. 11 illustrates a wire harness and noise filters disposed in an upper space constituting the home appliance according to a fifth embodiment of the present disclosure.

Hereinbelow, some embodiments of the present disclosure will be described in detail with reference to the accompanying drawings. It should be noted that in adding reference numerals to the components of each drawing, the same components have the same reference numerals as possible even though they are displayed on different drawings. In addition in describing the embodiments of the present disclosure, when it is determined that detailed descriptions of related well-known structures or functions hinder understanding of the embodiments of the present disclosure, detailed descriptions thereof will be omitted.

The present disclosure relates to a home appliance. Here, the home appliance may refer to a device having a storage space (not shown) inside, wherein the storage space is shielded by a door 50, 70. The door 50, 70 may be arranged in the front of the storage space and serve to open and close the storage space. Here, the front refers to direction facing a user when the user is positioned in front of the home appliance.

The home appliance may include various home appliances such as a cooking appliance, a refrigerator, a freezer, a kimchi refrigerator, a plant growing apparatus, a styler, and a washing machine. Below, the cooking appliance among the home appliances will be described as an example. The cooking appliance may be built into the interior of furniture.

For reference, in this embodiment, the door 50, 70 is composed of two doors 50 and 70, but may be applied to a cooking appliance equipped with only one lower door 70. Below, the two doors 50 and 70 of the present disclosure will be described as an example of being applied to the cooking appliance. In addition, among the two doors 50 and 70, a door positioned relatively higher may be identified as an upper door 50, and a door positioned lower may be identified as the lower door 70. Reference numerals 51 and 71 indicate front panels formed on the fronts of the upper door 50 and the lower door 70, respectively, and reference numerals 55 and 75 indicate door handles, respectively.

Hereinafter, the description will be on the basis of the upper door 50, and the upper door 50 will be referred to as the door 50.

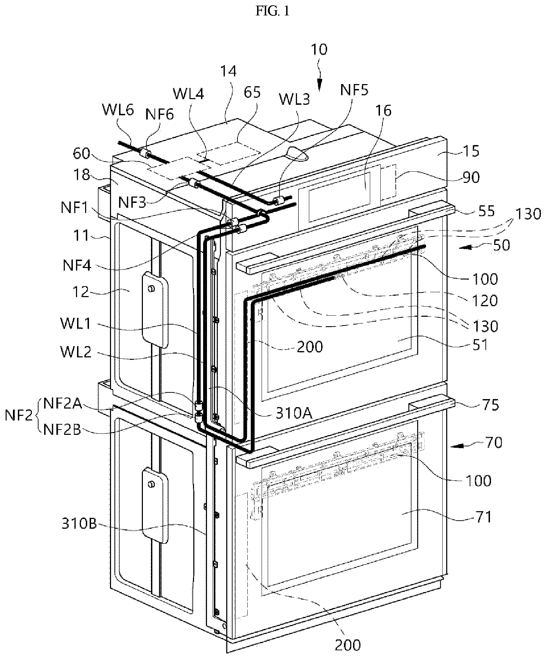

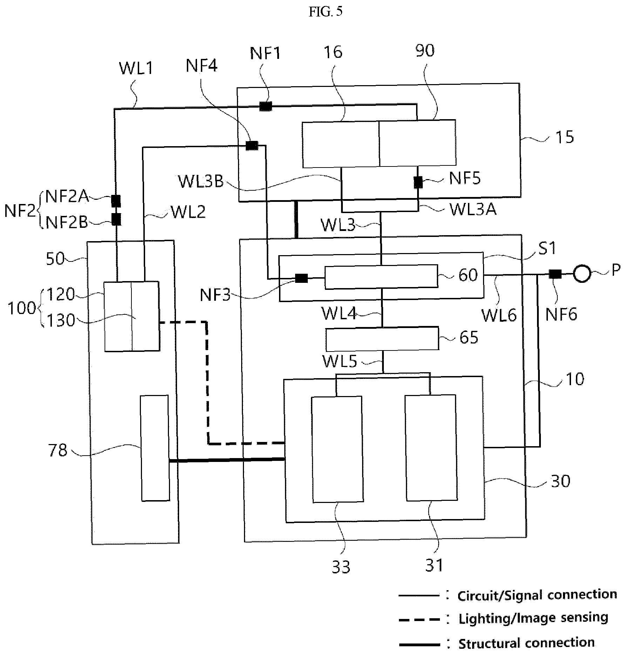

Referring to FIG. 1, a rear cover 11, a side cover 12, and a top cover 14, which constitute the cooking appliance, may constitute a casing of a main body. A cavity 30 (see FIG. 5) constituting the storage space may be provided inside the rear cover 11, the side cover 12, and the top cover 14. The cavity 30 may be regarded as a type of inner casing.

The upper part of the cooking appliance may include a top panel 15. The top panel 15 may be disposed on the upper end part of the front surface of the cooking appliance. The top panel 15 may include a display device 16. The display device 16 may operate the functions of the cooking appliance and display the status of the cooking appliance. The display device 16 may be configured as a touch-operable display. As another example, the display device 16 may be omitted from the top panel 15, and a display part 15a may be disposed on the door 50, 70.

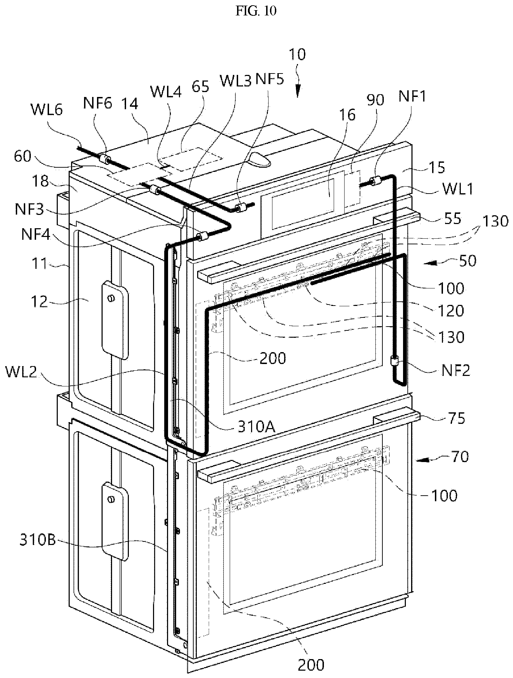

In this embodiment, control devices 60 and 90 may be disposed in an upper space S1 (see FIG. 10). For reference, the upper space S1 may be regarded as a type of electrical compartment. The upper space S1 may be a space separated from the storage space. In the present embodiment, the upper space S1 may be disposed between the top cover 14 and an upper casing 18. The upper casing 18 may be disposed on top of the side cover 12. The upper casing 18 may be disposed to surround the side surface of the upper space S1. The upper space S1 may be partitioned from the cavity 30 (see FIG. 5), which is arranged below the upper space S1, by an insulating cover. In addition to the control devices 60 and 90, a cooling fan 87 for cooling the cooking appliance may be disposed in the electrical compartment. Reference numeral 80 refers to a front plate constituting the front frame of a casing 10.

An electronic component unit 100 may be disposed in the door 50. The control devices 60 and 90 and the electronic component unit 100 may be electrically connected to each other through a wire harness. The control devices 60 and 90 may be a control parts that control the electronic component unit 100. The control devices 60 and 90 may control the display device 16 of the cooking appliance. As another example, the control devices 60 and 90 may be disposed on the side surface, rear surface or bottom surface of the casing 10, rather than inside the upper space S1. As another example, the upper space S1 may be placed in the lower part of the casing 10.

The electronic component unit 100 may provide various functions to the door 50. For example, the electronic component unit 100 may be provided with a camera device 120 (see FIG. 1) to obtain an internal image of the storage space. The door 50 may be provided with a lighting device 130 to increase the internal illuminance of the storage space.

As another example, the door 50 may have a separate display (not shown) of the door 50 as the electronic component unit 100. The display of the door 50 may provide information about the cooking appliance to a user through the front surface of the door 50. A user may input operating commands through the display of the door 50.

The electronic component unit 100 may be disposed in the door 50. The electronic component unit 100 may be connected to the main body of the cooking appliance by the wire harness so as to exchange electrical signals with or supply power to the control devices 60 and 90 provided in the main body of the cooking appliance.

The electronic component unit 100 may be disposed inside the door 50. The wire harness connected to the electronic component unit 100 may exit from the door 50 and be connected to the control devices 60 and 90. Among the entire length of the wire harness, a section of the wire harness continuing from the door 50 to the upper space S1 may be disposed outside the side surface of the casing 10 to be described below. The wire harness may include a control wire WL3 which connects a main control part 60 and an image control part 90 to be described below, and a power wire WL6 for receiving external power P.

As another example, the electronic component unit 100 may be disposed in only one of the upper door 50 and the lower door 70. As another example, among components constituting the electronic component unit 100, the electronic component unit 100 and the lighting device 130 may be disposed separately on the upper door 50 and the lower door 70.

As another example, the electronic component unit 100 may be disposed outside the lower door 70, rather than inside the lower door 70. For example, the electronic component unit 100 may be disposed on the upper surface, lower surface, front surface, rear surface, or side surface of the lower door 70, or on the second handle 75.

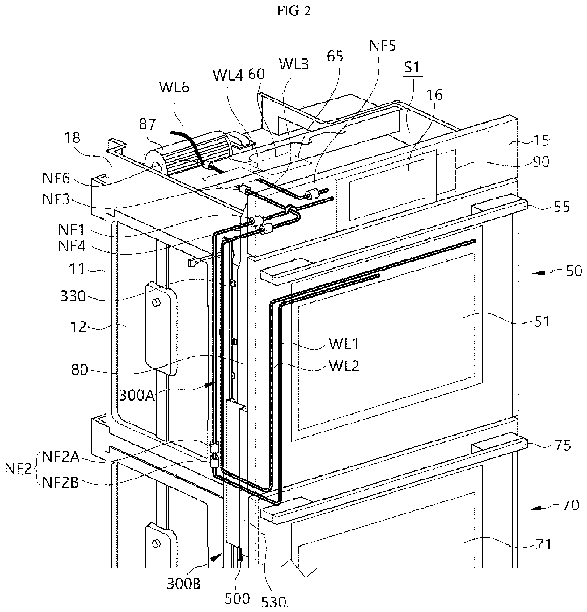

In this embodiment, a portion of the wire harness continuing from the door 50 to the upper space S1 may be arranged along a wire guide 300A, 300B. FIGS. 1 and 2 illustrate the wire guide 300A, 300B disposed on the side surface of the casing 10. In this embodiment, the wire guide 300A, 300B may include two wire guides 300A and 300B. For reference, FIG. illustrates covers 310A and 310B of the wire guides 300A and 300B, which are coupled to each other, and FIG. 2 illustrates the covers 310A and 310B separated from each other. In FIG. 2, reference numerals 500 and 530 refer to a guide bracket and a bracket body, respectively. The guide bracket 500 may be fixed to the surface of the side cover 12.

For convenience of explanation, first, the wire harness will be described. The wire harness may include a plurality of wires. These wires may connect different parts to each other, but some or all thereof may be tied each other to be held together. The wire harness may connect components to each other between the door 50 and the casing 10, and connect components to each other within the casing 10.

The wire harness may include a camera wire WL1 which connects the camera device 120 with the control devices 60 and 90. The camera wire WL1 may transmit the control signals and power of the control devices 60 and 90 to the camera device 120. In this embodiment, the camera wire WL1 may connect the image control part 90 constituting the control devices 60 and 90 with the camera device 120. In this case, as shown in FIG. 1, one end of the camera wire WL1 may be disposed at the upper center of the door 50. This is because the camera device 120 is disposed at the upper center of the door 50, and when the position of the camera device 120 is moved, the position of the one end of the camera wire WL1 may also be moved.

The wire harness may include a lighting wire WL2 which connects the lighting device 130 with the control devices 60 and 90. The lighting wire WL2 may transmit the control signals and power of the control devices 60 and 90 to the lighting device 130. When the lighting device 130 is provided with a temperature sensor (not shown), a sensing value of the temperature sensor may be transmitted to the control devices 60 and 90 through the lighting wire WL2. In this embodiment, the lighting wire WL2 may connect the main control part 60 constituting the control devices 60 and 90 with the lighting device 130. In this case, as shown in FIG 1, one end of the lighting wire WL2 may be connected across the upper part of the door 50 to an upper right end thereof. This is because a plurality of lighting elements included in the lighting device 130 are arranged along the upper portion of the door 50, and when the number or positions of the lighting elements of the lighting device 130 are moved, the position of the one end of the lighting wire WL2 may also be moved.

The camera wire WL1 and the lighting wire WL2 may be located outside the door 50 to be disposed along the side surface of the casing 10. The camera wire WL1 and the lighting wire WL2 may extend to the upper surface of the casing 10, i.e., the upper space S1. Accordingly, the camera wire WL1 and the lighting wire WL2 may be disposed along the two different surfaces of the casing 10. The camera wire WL1 and the lighting wire WL2 may be disposed parallel from the door 50 to the electrical compartment. The camera wire WL1 and the lighting wire WL2 may be stored by being tied to each other using fasteners (not shown).

The main control part 60 and the image control part 90, which constitute the control devices 60 and 90, may be connected to each other by the control wire WL3. The control wire WL3 may transmit power or control signals between the main control part 60 and the image control part 90. The control wire WL3 may be disposed in the electrical compartment. As another example, all or part of the control wire WL3 may be provided outside the electrical compartment.

The wire harness may include a relay wire WL4 which connects the main control part 60 with a relay assembly 65. The relay wire WL4 may transmit power or control signals between the main control part 60 and the relay assembly 65. The relay wire WL4 may be disposed in the electrical compartment. As another example, when the relay assembly 65 is omitted or when the relay assembly 65 is configured as a part of the main control part 60, the relay wire WL4 may be omitted.

Referring to FIG. 5, a cavity wire WL5 may be connected to the relay assembly 65. The cavity wire WL5 may transmit power from the relay assembly 65 to a lamp 31 or a heater device 33 inside the cavity 30. As another example, when the relay assembly 65 is omitted, the lamp 31 or the heater device 33 may be powered directly from the main control part 60.

For reference, in FIG. 5, a part in which each of components is physically connected to each other is expressed with a thick solid line. In FIG. 5, the path of light emitted toward the main body from the lighting device 130 and the path of sensing an image from the camera device 120 are expressed as a dotted line. In FIG. 5, circuit or signal connections between each component are expressed with thin solid lines. These thin solid lines refer to the wire harness.

Referring back to FIG. 1, the power wire WL6 may be connected to the main control part 60. The power wire WL6 may transmit the external power P to the main control part 60. For example, the power wire WL6 may transmit external AC power to the main control part 60. As another example, a converter device (not shown) may be provided between the external power P and the main control part 60 to convert AC power into DC power and then transmit the DC power to the main control part 60.

The wire harness may include the noise filter. The noise filter may prevent EMI of the wire harness. EMI may include conducted noise caused by a current-carrying conductor and radiated noise emitted around a current-carrying conductor. In this embodiment, radiated noise may be generated among the main control part 60, the main control part 60, and the camera device 120. Conducted noise may be generated in the power wire WL6.

In addition, overvoltage may be applied to the entire circuit structure, including the electronic component unit 100 and the control devices 60 and 90 according to this embodiment. For example, when constant power is not supplied from the outside or a current leakage occurs, a large voltage is applied to the control devices 60 and 90. This overvoltage may also be controlled by the noise filter.

The noise filter is intended to reduce the effect of EMI on the control devices 60 and 90 and the electronic component unit 100. In this embodiment, the noise filter may include a plurality of noise filters. The plurality of noise filters may be provided on wires constituting the wire harness. The wires may be wound around the plurality of noise filters and then pass through the noise filters, or the wires may pass through the noise filters.

The noise filters may be configured as a ferrite bead. The ferrite bead may induce counter electromotive force when there is a high-frequency signal in the surroundings, thereby attenuating a ferrite frequency response. The ferrite bead may have a structure in which a magnetic ceramic containing iron oxide is provided inside and a core cover, an insulator, surrounds the magnetic ceramic. The ferrite core may serve to block noise by increasing an inductance or capacitance value.

When manganese-zinc ferrite among the ferrite beads is used, the capacitor value may be increased, thereby achieving the effect of blocking low frequencies. In addition, when copper-zinc or nickel-zinc ferrite among the ferrite beads is used, the inductance value may be increased, which may prevent high frequencies.

The ferrite bead may have a ring core structure in which a wire may pass through a center thereof. As another example, the noise filter may have a thin plate-like structure, and a middle part thereof may be folded to wrap a wire. As another example, the noise filter, which has a simple flat plate structure, may be bent to wrap around a wire.

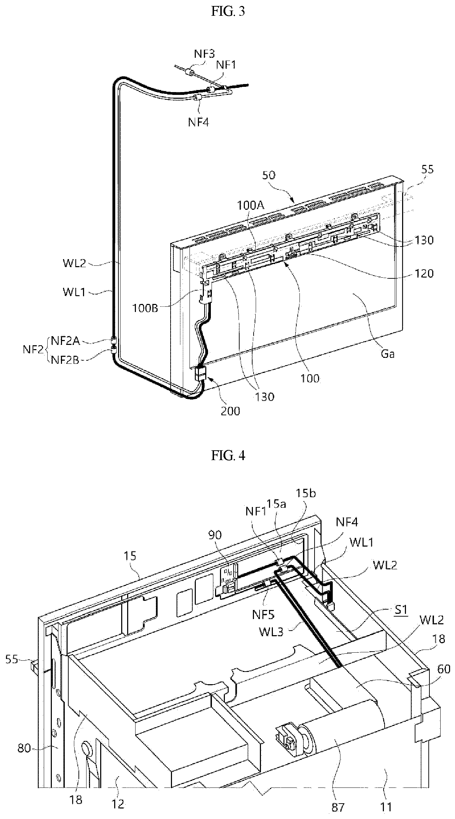

Referring to FIGS. 3 and 4, schematic views of how the noise filter is arranged are shown. As is shown, the noise filter may be composed of a plurality of noise filters. The noise filter may include a camera noise filter NF1, NF2 provided in the camera wire WL1. The camera noise filter NF1, NF2 may prevent EMI generated through the camera wire WL1.

For reference, as shown in FIG. 3, the electronic component unit may include a first unit part 100A in which the camera device 120 and the lighting device 130 are arranged, and a second unit part 100B which is connected to the first unit part 100A and guides the wire harness. Reference numeral 200 refers to a connector part. The connector part 200 may connect the wires inside the door 50. As another example, the connector part 200 may be omitted. Unexplained reference numeral Ga refers to a glass part of the door 50.

In this embodiment, the camera noise filters NF1 and NF2 may include a first camera noise filter NF1 and a second camera noise filter NF2. The first camera noise filter NF1 may be positioned close to the image control part 90 to prevent EMI in the image control part 90 or an area around the image control part 90. The first camera noise filter NF1 may be disposed in the electrical compartment.

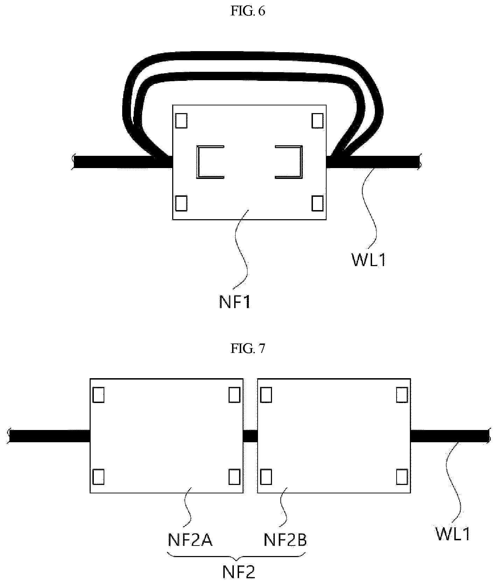

The camera wire WL1 may pass through the first camera noise filter NF1 after being wound multiple times around the first camera noise filter NF1. Referring to FIG. 6, the camera wire WL1 may pass through the first camera noise filter NF1 after being wound twice around the first camera noise filter NF1. The winding count of the camera wire WL1 may vary depending on an EMI value of the surrounding area.

The second camera noise filter NF2 may be provided closer to a lower part of the door 50 than the first camera noise filter NF1. The second camera noise filter NF2 may prevent EMI of the camera wire WL1 which connects the electronic component unit 100 with the image control part 90. In particular, when AC power or switched power is applied to the lighting device 130, a large amount of EMI may be generated from the lighting wire WL2, but the camera wire WL1, which is arranged parallel to the lighting wire WL2, may prevent EMI through the second camera noise filter NF2.

The second camera noise filter NF2 may be positioned in a different position from the first camera noise filter NF1. More precisely, the second camera noise filter NF2 may be disposed on a second surface of the casing 10. Here, the second surface refers to the surface of the side cover 12 of the casing 10. The first camera noise filter NF1 may be disposed on a first surface of the casing 10, wherein the first surface refers to the surface of the insulator (no reference numeral assigned) constituting the bottom surface of the electrical compartment.

Accordingly, the first camera noise filter NF1 and the second camera noise filter NF2 may be disposed on different surfaces from each other. In this case, EMI conducted around a plurality of surfaces that constitute the casing 10 may be more effectively prevented. In addition, in this embodiment, the camera wire WL1 may form a long path from the door 50 to the image control part 90, and thus EMI along the long path may be prevented by the first camera noise filter NF1 and the second camera noise filter NF2, which are spaced apart from each other.

Referring to FIG. 2, the second camera noise filter NF2 may be disposed to face the side cover 12 of the casing 10. The second camera noise filter NF2 may be positioned outside the door 50 and be disposed to face the side cover 12. Accordingly, the second camera noise filter NF2 does not need to be disposed inside the door 50, which is narrow, and the installation of the second camera noise filter NF2 may be facilitated more.

Meanwhile, the space between the side cover 12, on which the second camera noise filter NF2 is disposed, and a surface of an installation space or an outer cover (not shown) covering the side cover 12 may be narrow. In this case, the second camera noise filter NF2 may be composed of a plurality of second camera noise filters NF2A and NF2B arranged in series along the camera wire WL1. The plurality of second camera noise filters NF2A and NF2B may be arranged in series to effectively prevent EMI of the camera wire WL1. Referring to FIG. 7, the camera wire WL1 may not be wound around the second camera noise filters NF2A and NF2B, but may simply pass through the second camera noise filters NF2A and NF2B.

Referring to FIGS. 4 and 5, the wire harness may include the lighting wire WL2 which connects the lighting device 130 with the control devices 60 and 90. The lighting wire WL2 may be provided with the plurality of lighting noise filters NF3 and NF4. The plurality of lighting noise filters NF3 and NF4 may prevent EMI generated on a path between the lighting device 130 and the main control part 60.

The plurality of lighting noise filters NF3 and NF4 may include a first lighting noise filter NF3 provided adjacent to the main control part 60 of the control devices 60 and 90. The first lighting noise filter NF3 may be provided adjacent to the main control part 60 to prevent radiated noise generated from the main control part 60 or around the main control part 60. The first lighting noise filter NF3 may be configured as a ferrite bead around which the lighting wire WL2 is wound.

The plurality of lighting noise filters NF3 and NF4 may include a second lighting noise filter NF4 provided adjacent to the image control part 90. The second lighting noise filter NF4 may be provided adjacent to the image control part 90 to prevent radiated noise generated from the image control part 90 or around the image control part 90. In this embodiment, the image control part 90 may be provided adjacent to the display device 16, and thus the second lighting noise filter NF4 may prevent radiated noise generated around the display device 16. The second lighting noise filter NF4 may be configured as a ferrite bead around which the lighting wire WL2 is wound.

For reference, although not shown, the switching power converter may be connected to the main control part 60. The switching power converter may convert an input voltage to control an output voltage. Through this, power may be supplied to the lighting device 130 to suit various voltage requirements. Accordingly, a high voltage may be applied to the lighting device 130.

In this case, the second lighting noise filter NF4 may be provided between the switching power converter and the lighting device 130. More precisely, the second lighting noise filter NF4 may be provided in the electrical compartment to be closer to the switching power converter than the main control part 60. As another example, the switching power converter may be provided in the main control part 60 to be integrated therewith. As another example, the second lighting noise filter NF4 may be provided at a position facing the side cover 12.

The control wire WL3 may be provided with a control noise filter NF5. The control noise filter NF5 may prevent noise generated from the control wire WL3 which connects the main control part 60 with the image control part 90. Referring to FIG. 5, the control wire WL3 may include a first control wire WL3A which connects the main control part 60 with the image control part 90, and a second control wire WL3B which connects the main control part 60 with the display device 16. In this case, the control noise filter NF5 may be provided on the first control wire WL3A which connects the main control part 60 with the image control part 90. The control noise filter NF5 may prevent noise of the image control part 90, which is more sensitive to noise.

As shown in FIG. 5, a power noise filter NF6 may be provided on the power wire WL6 connected to the external power P. The power noise filter NF6 may prevent conductive noise generated from the power wire WL6. Although one power noise filter NF6 is shown in the drawing, the power noise filter NF6 may be provided on each of three power wires WL6 that transmits a three-phase AC current (three-phase power).

Meanwhile, referring to FIG. 4, the upper space S1 which is partitioned from the storage space may be formed above the storage space of the cavity 30. At least some of the control devices 60 and 90, the wire harness, and the plurality of noise filters may be disposed in the upper space S1. Specifically, the main control part 60, the image control part 90, a housing part 15b constituting the display device 16, the first camera noise filter NF1, the second lighting noise filter NF4, and the control noise filter NF5 may be disposed in the storage space. In addition, although not shown in FIG. 4, the first lighting noise filter NF3 and the power noise filter NF6 may also be disposed in the storage space. By utilizing the large storage space, the noise filters may be disposed in various locations.

In the casing 10, the housing part 15b and the display part 15a, which constitute the display device 16, are illustrated. The housing part 15b may form the frame of the display device 16. The housing part 15b may be open toward the upper space S1. The display part 15a may be disposed in this open part. The display part 15a may include a liquid crystal display device and a liquid crystal substrate. The liquid crystal substrate of the display part 15a may be exposed to the upper space S1, and the liquid crystal display device may be exposed to the front of the cooking appliance.

In this case, some or all of the plurality of noise filters may be disposed in the housing part 15b. In this embodiment, the first camera noise filter NF1, the second lighting noise filter NF4, and the control noise filter NF5 may be stored in the housing part 15b. When the noise filters are stored in the empty space of the housing part 15b, the noise filters may be maintained in a stable stored state. Additionally, the plurality of noise filters adjacent to each other may intensively prevent EMI generated around the image control part 90 adjacent to the display device 16.

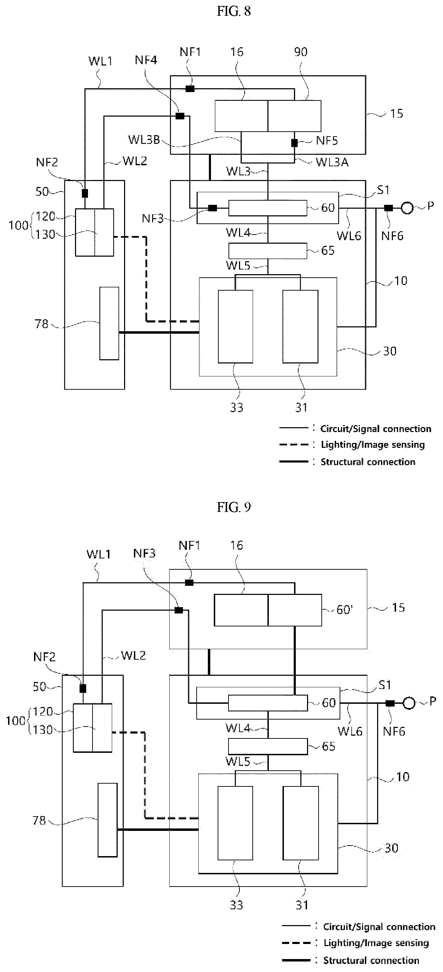

Meanwhile, FIG. 8 conceptually illustrates electronic components constituting the home appliance, a wire harness connecting the components, and noise filters according to a second embodiment of the present disclosure. The description of the same parts as the previous embodiment will be omitted. As is seen, in this embodiment, among the noise filters, the second camera noise filter NF2 may be disposed inside the door 50. In this case, the second camera noise filter NF2 may be disposed closer to the camera device 120, and thus may prevent EMI more effectively. In this case, the second camera noise filter NF2 may be configured as a ferrite bead.

FIG. 9 conceptually illustrates electronic components constituting the home appliance, a wire harness connecting the components, and noise filters according to a third embodiment of the present disclosure. The description of the same parts as the previous embodiment will be omitted. As is seen, in this embodiment, control devices 60 and 60' may be configured as one component. A main control part 60 and an image control part 60' included in the control devices 60 and 60' may be combined with each other, or the image control part 60' may be included in the main control part 60. Accordingly, the control wire WL3 may be omitted between the main control part 60 and the image control part 60'. In addition, the control noise filter NF5 may also be omitted between the main control part 60 and the image control part 60'.

FIG. 10 illustrates a wire harness and noise filters provided according to a fourth embodiment of the present disclosure. The description of the same parts as the previous embodiments will be omitted. As is seen, the camera wire WL1 connected to the camera device 120 may be disposed along a first side surface of the casing 10. In addition, the lighting wire WL2 connected to the lighting device 130 may be disposed along a second side surface of the casing 10 opposite to the first side surface. In this case, the camera wire WL1 and the lighting wire WL2 may extend in opposite directions, so that an overlapping section between the camera wire WL1 and the lighting wire WL2 may be reduced. Accordingly, EMI generated by the lighting wire WL2 may not be transmitted to the camera wire WL1, or the size of the transmitted EMI may be significantly reduced.

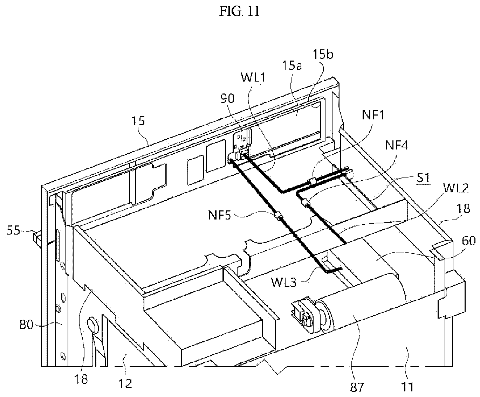

FIG. 11 illustrates a wire harness and noise filters disposed in the upper space S1 constituting the home appliance according to a fifth embodiment of the present disclosure. AS is seen, the noise filters may not be stored in the housing part 15b of the display device 16, but may be disposed in the upper space S1. For example, among the noise filters, the first camera noise filter NF1, the second lighting noise filter NF4, and the control noise filter NF5 may be disposed in the upper space S1, and may be fixed to the upper space S1 by using a separate fixing clip (not shown) or fixing cable (not shown).

## Claims

1. A home appliance comprising:
a casing (10) having a storage space therein;
a door (50) provided in front of the storage space to open and close the storage space;
an electronic component unit (100) which is disposed in the door (50) and comprises a camera device (120) for photographing the storage space and a lighting device (130) for emitting light into the storage space;
control devices (60, 90) disposed in the casing (10) to control the electronic component unit (100);
a wire harness which connects the control devices (60, 90) with the electronic component unit (100); and
a plurality of noise filters (NF1, NF2, NF3, NF4) coupled to the wire harness.

2. The home appliance of claim 1, wherein each of the noise filters (NF1, NF2, NF3, NF4) is positioned outside the door (50) and is disposed to face a surface of the casing (10).

3. The home appliance of claim 1, or 2, wherein each of the noise filters (NF1, NF2, NF3, NF4) is configured as a ferrite bead,
wherein the wire harness passes through the ferrite bead or is wound around the ferrite bead and then passes through the ferrite bead.

4. The home appliance of claim 1, 2, or 3, wherein the camera device (120) and the control devices (60, 90) are connected to each other by a camera wire (WL1),
wherein the camera wire (WL1) is provided with a camera noise filter (NF1, NF2).

5. The home appliance of claim 4, wherein the camera noise filter (NF1, NF2) is disposed to face a side surface of the casing (10).

6. The home appliance of claim 4, wherein the camera noise filter (NF1, NF2) comprises:
a first camera noise filter (NF1) disposed on a first surface of the casing (10); and
a second camera noise filter (NF2) disposed closer to a lower part of the door (50) than the first camera noise filter (NF1) and disposed on a second surface of the casing (10).

7. The home appliance of claim 6, wherein the second camera noise filter (NF2) is composed of a plurality of second camera noise filters (NF2) arranged in series along the camera wire (WL1),
wherein each of the plurality of second camera noise filter s (NF2) is configured as a ferrite bead.

8. The home appliance of any one of claims 1 to 7, wherein the lighting device (130) and the control devices (60, 90) are connected to each other by a lighting wire (WL2),
wherein the lighting wire (WL2) is provided with a lighting noise filter (NF3, NF4).

9. The home appliance of any one of claims 1 to 8, wherein the wire harness comprises:
a camera wire (WL1) which connects the camera device (120) with the control devices (60, 90); and
a lighting wire (WL2) which connects the lighting device (130) with the control devices (60, 90),
wherein the plurality of noise filters (NF1, NF2, NF3, NF4) is provided along the camera wire (WL1) and the lighting wire (WL2).

10. The home appliance of claim 9, wherein the camera wire (WL1) and the lighting wire (WL2) are disposed along a first side surface of the casing (10).

11. The home appliance of claim 9, or 10, wherein the camera wire (WL1) is disposed along a first side surface of the casing (10), and
the lighting wire (WL2) is disposed along a second side surface of the casing (10) opposite to the first side surface.

12. The home appliance of claim 1, wherein the control devices (60,90) comprise:
a main control part (60) connected to the lighting device (130); and
an image control part (90) connected with the main control part (60) and connected to the camera device (120) to control the camera device (120),
wherein the main control part (60) and the image control part (90) are connected to each other by a control wire (WL3A),
wherein the control wire (WL3A) is provided with a control noise filter (NF5).

13. The home appliance of any one of claims 1 to 12, wherein the wire harness comprises a lighting wire (WL2) which connects the lighting device (130) with the control devices (60,90),
wherein the lighting wire (WL2) is provided with a plurality of lighting noise filters (NF3, NF4),
wherein the plurality of lighting noise filters (NF3, NF4) comprises:
a first lighting noise filter (NF3) provided adjacent to a main control part (60) among the control devices (60,90); and
a second lighting noise filter (NF4) provided adjacent an image control part (90) among the control devices (60,90).

14. The home appliance of claim 13, wherein a switching power converter is connected to the main control part (60), and the plurality of lighting noise filters (NF3, NF4) is provided between the switching power converter and the lighting device (130).

15. The home appliance of any one of claims 1 to 14, wherein the casing (10) is provided with a display device (16),
wherein the display device (16) comprises a housing part (15b), and a display part (15a) disposed in the housing part (15b) and exposed to the outside of the casing (10),
wherein some or all of the plurality of noise filters (NF1, NF5) are disposed in the housing part (15b).
